# EUROPÄISCHE PATENTSCHRIFT

(11) **EP 0 816 723 B1**
(45) Veröffentlichungstag und Bekanntmachung des Hinweises auf die Patenterteilung: **25.09.2002**
(21) Anmeldenummer: 97102383.3
(22) Anmeldetag: 14.02.1997
(51) Int. Cl.: F16J 15/08

(54) **Metallische Flachdichtung**
Metallic flat gasket
Joint plat métallique

(30) Priorität: 26.06.1996 DE 19625491
(43) Veröffentlichungstag der Anmeldung: 07.01.1998
(73) Patentinhaber: Federal-Mogul Sealing Systems GmbH, 57562 Herdorf (DE)
(72) Erfinder: Majewski, Klaus-Peter, Dipl.-Ing., 51399 Burscheid (DE); Schmitt, Klaus, Dipl.-Ing., 57520 Grünebach (DE); Heilig, Markus, Dipl.-Ing., 57520 Derschen (DE); Heike, Matthias, Dipl.-Ing., 38159 Vechelde (DE); Lönne, Klaus, Dipl.-Ing., 51399 Burscheid (DE)

(56) Entgegenhaltungen:
- EP-A- 0 465 268
- EP-A- 0 486 817
- EP-A- 0 757 195
- US-A- 5 205 566

## Beschreibung

Die Erfindung betrifft eine ein- oder mehrlagige metallische Flachdichtung, wie insbesondere eine Zylinderkopfdichtung oder Auspufflanschdichtung für Verbrennungskraftmaschinen, mit mindestens einer gesickten Dichtungslage aus einem Federstahlblech und Auflagen aus druckfestem Material, auf mindestens einer der Metallagen, zur Erzielung einer hohen Dichtpressung im Bereich von Durchgangsöffnungen.

Es ist bekannt, Zylinderkopfdichtungen für Verbrennungskraftmaschinen aus Metallblechen herzustellen, wobei sowohl einlagige aus einem Metallblech bestehende, als auch mehrlagige aus einem Metallblechplattenlaminat bestehende Zylinderkopfdichtungen in der Praxis verwendet werden. Zur Erhöhung der Abdichtwirkung an vor allem den Brennraumöffnungen und aber auch an den Flüssigkeitsöffnungen für das Schmiermittel und die Kühlflüssigkeiten sowie an den Schraubenöffnungen ist es bekannt, in die Metallbleche rund um die Durchgangsöffnungen Sicken einzuprägen, wobei bei Dichtungen aus Metallblechlaminaten entweder alle oder auch nur ein Teil der Metallplatten mit Sicken versehen sein können. Zur Erzielung eines verbesserten elastischen Verformungswiderstandes der Sicken besteht mindestens eine der Metallblechplatten vielfach aus einem Federstahl, während für die anderen Metallbleche andere Stahlsorten oder Metallegierungen mit gegebenenfalls auch unterschiedlichen technologischen Eigenschaften verwendet werden.

Aus der EP 0 486 817 B1 ist eine Zylinderkopfdichtung bestehend aus einer gesickten Dichtungslage mit einer ringförmigen Ausgleichsscheibe aus Metall bekannt, die auf der Oberfläche der Dichtungslage angeordnet und mit dieser verschweißt ist. Damit die Sicken der Dichtungslage einen hohen elastischen Verformungswiderstand aufweisen, werden sie aus Federstahl hergestellt.

Beim Aufschweißen der Auflagen gemäß des Standes der Technik besteht die Gefahr, daß die elastischen Eigenschaften der Sicken durch die beim Aufschweißen auftretenden Temperaturen beeinflußt werden.

Der Erfindung liegt die Aufgabe zu Grunde, eine gattungsgemäße Flachdichtung dahingehend zu verbessern, daß das Abdichtverhalten optimiert wird, wobei gleichzeitig die Herstellkosten gesenkt werden.

Diese Aufgabe wird erfindungsgemäß durch die Merkmale des Patentanspruch 1 gelöst. Vorteilhafte Ausgestaltungen dieser Erfindung sind in den Unteransprüchen dokumentiert. Als Federstahlbleche werden vergütbare Stähle, insbesondere Edelstähle verwendet. Für die Herstellung der Dichtungslage können diese im kaltgewalzten, weichen Zustand verwendet werden. Das bevorzugt im Siebdruckverfahren aufgebrachte sinterfähige Material läßt sich in jeder beliebigen Dicke oder Geometrie auf die Dichtungslage aufbringen. Die zum Sinter-/Schmelzprozeß notwendigen Temperaturen werden dafür benutzt, gleichzeitig das weiche Federstahlblech zu härten. Auf diese Weise kann auf den sonst üblichen Arbeitsgang "Härten" verzichtet werden.

Während vor allem die Sinterauflagen ringförmig die Brennräume umgebend aufgetragen sind und dort die Dichtpressung verstärken, ist es auch möglich die Sinterauflagen in anderen Bereichen der Metallplatte aufzutragen. Je nach Anwendungsfall sind die druckfesten Auflagen mit Sickungen oder Elastomerauflagen und Kunstharzauflagen auf der Metallplatte kombiniert. Bei mehrlagigen Metalldichtungen können dabei die druckfesten Auflagen auf eine oder mehrere der Metallplatten aufgetragen sein.

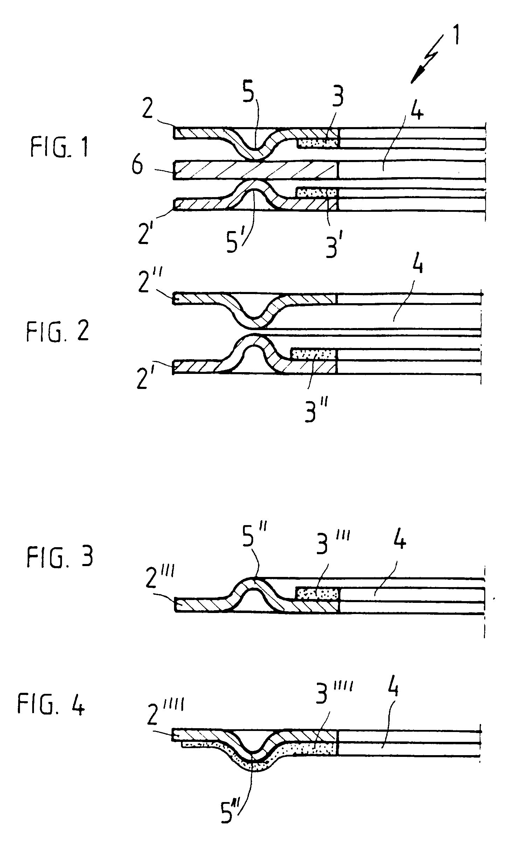

Die Abbildungen 1 - 4 zeigen Querschnittsbilder von ein- oder mehrlagigen Metalldichtungen am Brennraumrand mit erfindungsgemäßen Auflagen aus druckfestem Material.

Die Figur 1 zeigt eine mehrlagige Flachdichtung (1) bestehend aus einer oberen und unteren Dichtungslage (2, 2') mit einer aufgesinterten oder aufgeschmolzenen Auflage (3, 3') am Rand einer Durchgangsöffnung (4) für den Brennraum einer Verbrennungskraftmaschine. Die beiden Dichtungslagen (2, 2') sind mit Abstand zur Durchgangsöffnung gesickt. Die Sicken (5, 5') stützen sich auf einer Zwischenlage (6) ab. In der Figur 2 ist eine Flachdichtung ohne Zwischenlage dargestellt die Auflage (3'') ist nur auf der unteren Dichtungslage (2') angeordnet. Die Anzahl der Metallagen ist variabel.

Die Auflagen (3''', 3"") können wie in Figur 3 und 4 dargestellt auch bei einlagigen Flachdichtungen eingesetzt werden und sich darüber hinaus radial über die Sicken (5''') (Figur 4) erstrecken.

## Patentansprüche

1. Ein- oder mehrlagige metallische Flachdichtung, wie insbesondere eine Zylinderkopfdichtung oder Auspufflanschdichtung für Verbrennungskraftmaschinen, mit mindestens einer gesickten Dichtungslage (2, 2', 2", 2''', 2'''') aus einem Federstahlblech und Auflagen (3, 3', 3", 3''', 3"") aus druckfestem Material auf mindestens einer der Metallagen zur Erzielung einer hohen Dichtpressung im Bereich von Durchgangsöffnungen, **dadurch gekennzeichnet, daß** die Auflage (3, 3', 3", 3''', 3"") aus einem sinterfähigen Material besteht und auf die gesickte Dichtungslage (2, 2', 2", 2''', 2"") aufgesintert und/oder aufgeschmolzen ist, wobei die Dichtungslage (2, 2', 2", 2''', 2"") dem Sinter-/Schmelzprozeß metallurgisch derart angepaßt ist, daß die Dichtungslage (2, 2', 2", 2''', 2"") erst durch den Sinter-/Schmelzprozeß gehärtet ist.

2. Flachdichtung nach Anspruch 1, **dadurch gekennzeichnet, daß** die Auflagen (3, 3', 3", 3''', 3"") am Randbereich der Durchgangsöffnungen (4) angeordnet sind.

3. Flachdichtung nach Anspruch 1 und 2, **dadurch gekennzeichnet, daß** die Auflage (3"") sich radial bis unter die Sicke (5''') der Dichtungslage (2'''') erstreckt.

4. Flachdichtung nach den Ansprüchen 1 bis 3, **dadurch gekennzeichnet, daß** die Dichtungslage (2, 2', 2", 2''', 2"") aus Federstahl der Klasse 1.4021 besteht.

5. Verfahren zur Herstellung einer Flachdichtung nach mindestens einem der Ansprüche 1 bis 4, **dadurch gekennzeichnet, daß** das sinterfähige Material im Siebdruckverfahren auf die Dichtungslage (2, 2', 2", 2'', 2"") aufgebracht und anschließend der Sinter-/Schmelzprozeß eingeleitet wird, wobei durch die beim Sinter-/Schmelzprozeß auftretende Temperatur die Dichtungslage (2, 2', 2", 2''', 2"") gehärtet wird und danach die Sicke (5, 5', 5", 5''') eingeprägt wird.

6. Verfahren nach Anspruch 5, **dadurch gekennzeichnet, daß** nach dem Härten ein Anlassen der Dichtungslage (2, 2', 2", 2''', 2"") durchgeführt wird.

## Claims

1. Single or multilayer metallic flat gasket, such as in particular a cylinder head gasket or exhaust flange gasket for internal combustion engines, with at least one crimped gasket layer (2, 2', 2", 2''', 2'''') made of a spring steel sheet and overlays (3, 3', 3", 3''', 3"") made of compression-proof material on at least one of the metal layers in order to obtain a high sealing pressure in the region of through-openings, **characterised in that** the overlay (3, 3', 3", 3''', 3"") is made of a sinterable material and is sinter-fused and/or melted onto the crimped gasket layer (2, 2', 2", 2"', 2""), the gasket layer (2, 2', 2'', 2''', 2'''') being metallurgically adapted to the sintering/melting process in such a manner that the gasket layer (2, 2', 2", 2''', 2'''') is only hardened by means of the sintering/melting process.

2. Flat gasket according to claim 1, **characterised in that** the overlays (3, 3', 3'', 3"', 3'''') are disposed at the edge region of the through-openings (4).

3. Flat gasket according to claim 1 and 2, **characterised in that** the overlay (3"") extends radially to below the crimping (5"') of the gasket layer (2"").

4. Flat gasket according to claims 1 to 3, **characterised in that** the gasket layer (2, 2', 2", 2''', 2'''') is made of spring steel of the class 1.4021.

5. Method for producing a flat gasket according to at least one of the claims 1 to 4, **characterised in that** the sinterable material is applied to the gasket layer (2, 2', 2'', 2"', 2'''') in the screen printing method and subsequently the sintering/melting process is initiated, the gasket layer (2, 2', 2", 2''', 2'''') being hardened by the temperature which occurs during the sintering/melting process and thereafter the crimping (5, 5', 5", 5''') being stamped.

6. Method according to claim 5, **characterised in that** a tempering of the gasket layer (2, 2', 2", 2''', 2'''') is implemented after hardening.

## Revendications

1. Garniture d'étanchéité plate métallique mono ou multi-couche, comme en particulier un joint de culasse de cylindre ou un joint de bride d'échappement pour un moteur à combustion interne, comportant au moins une couche d'étanchéité moulurée (2, 2', 2", 2''', 2"") réalisée en tôle d'acier à ressort et des zones d'appui (3, 3', 3", 3''', 3"") en matériau résistant à la compression sur au moins une des couches métalliques pour obtenir une haute compression étanche dans le domaine d'ouvertures de passage, **caractérisée en ce que** la zone d'appui (3, 3', 3", 3''', 3'''') est réalisée en un matériau fritable et est frité et/ou fondu sur la couche d'étanchéité moulurée (2, 2', 2", 2''', 2""), la couche d'étanchéité (2, 2', 2'', 2''', 2'''') est adaptée de manière métallurgique au processus de frittage/fusion de telle sorte que le couche d'étanchéité (2, 2', 2", 2''', 2"") n'est durcie que par le processus de frittage/fusion.

2. Garniture d'étanchéité plate selon la revendication 1, **caractérisée en ce que** les zones d'appui (3, 3', 3", 3''', 3"") sont disposées au niveau du bord des ouvertures de passage (4).

3. Garniture d'étanchéité plate selon les revendications 1 et 2, **caractérisée en ce que** la zone d'appui (3'''') s'étend radialement jusqu'en dessous de la moulure (5") de la couche d'étanchéité (2"").

4. Garniture d'étanchéité plate selon les revendications 1 à 3, **caractérisée en ce que** la couche d'étanchéité (2, 2', 2", 2''', 2"") est constituée d'acier à ressort de la classe 1.4021.

5. Procédé pour fabriquer une garniture d'étanchéité plate selon au moins une des revendications 1 à 4, **caractérisé en ce que** le matériau fritable est amené dans le procédé de sérigraphie sur la couche d'étanchéité (2, 2', 2", 2''', 2""), le processus de frittage/fusion est ensuite amorcé, la température présente lors du processus de frittage/fusion durcissant la couche d'étanchéité (2, 2', 2'', 2''', 2"") et ensuite la moulure (5,5',5'', 5''') est formée.

6. Procédé selon la revendication 5, **caractérisé en ce qu'**après le durcissement, la couche d'étanchéité (2, 2', 2", 2''', 2"") est recuite.
